# EUROPEAN PATENT APPLICATION

(11) **EP 3 895 982 A1**
(43) Date of publication of application: **20.10.2021**
(21) Application number: 19895342.4
(22) Date of filing: 18.10.2019
(51) Int. Cl.: B64C 1/30, B64C 27/08

(54) **FRAME FOR AIRCRAFT AND AIRCRAFT**

(30) Priority: 13.12.2018 CN 201811524666
(71) Applicant: Guangzhou Xaircraft Technology Co., Ltd, Tianhe District Guangzhou, Guangdong 510000 (CN)
(72) Inventor: WEN, Hai jun, Guangzhou, Guangdong 510000 (CN); HE, Jianbing, Guangzhou, Guangdong 510000 (CN); PENG, Bin, Guangzhou, Guangdong 510000 (CN)
(74) Representative: Dilg, Haeusler, Schindelmann Patentanwaltsgesellschaft mbH
(86) International application number: PCT/CN2019/112020
(87) International publication number: WO 2020/119248

(57) **Abstract**

A frame for an aircraft (100), and an aircraft (100). The frame comprises: a body (10) and a fixing assembly (20). The fixing assembly (20) is provided on the body (10). The fixing assembly (20) comprises a fixing frame (210) and a fastening frame (220) spaced apart from each other in a first direction. The fixing frame (210) has two first assembly slots (2120) spaced apart from each other in a second direction. Each first assembly slot (2120) is suitable for accommodating a first arm (901). The fastening frame (220) comprises two second assembly slots (2220) spaced apart from each other in the second direction. Each second assembly slot (2220) is suitable for accommodating a second arm (902). The first direction is perpendicular to the second direction. The structure of the frame is simplified, thereby facilitating assembly and disassembly of an arm (90) of the aircraft (100).

## Description

### Cross-Reference to Related Applications

The present disclosure claims priority to Chinese Patent Application No. 201811524666.1, filed with the Chinese Patent Office on December 13, 2018, entitled "Frame for Aircraft and Aircraft", which is incorporated herein by reference in its entirety.

### Technical Field

The present disclosure relates to the technical field of aircrafts, and in particular to a main frame for an aircraft and to an aircraft.

### Background Art

Aircrafts, having the advantages of flexible maneuverability, rapid response, unmanned flight, and low operation requirements, have attracted much attention and have been used in many fields such as agriculture and exploration.

An aircraft usually comprises a main body, a plurality of (e.g., four, six, eight, or more) arms connected to the main body, a power device arranged on each of the arms and configured to drive the aircraft to fly, and a control system configured to control the aircraft.

The aircraft is subjected to a large load during its operation, and therefore the arms and the main body of the aircraft are required to be connected at high strength. In the related art, the arms and the main body are assembled by complicated and cumbersome structures.

### Summary

The object of the present disclosure includes, for example, providing a main frame for an aircraft, which has the advantages of simple structure and convenient assembly.

The object of the present disclosure also includes providing an aircraft comprising the main frame for an aircraft described above which has the advantages of simple structure and convenient assembly.

Embodiments of the present disclosure may be implemented as follows:
An embodiment of the present disclosure provides a main frame for an aircraft, comprising:
a main body; and
a fixing component, wherein the fixing component is arranged on the main body, the fixing component comprises a fixing frame and a fastening frame arranged spaced apart from each other in a first direction, the fixing frame has two first assembling grooves arranged spaced apart from each other in a second direction, each of the first assembling grooves is suitable for accommodating one of first arms of the aircraft, and the fastening frame comprises two second assembling grooves arranged spaced apart from each other in the second direction, each of the second assembling grooves is suitable for accommodating one of second arms of the aircraft, and the first direction is perpendicular to the second direction.

Optionally, the fixing frame is symmetrical about a first axis; and/or,
the fastening frame is symmetrical about a second axis; and/or,
the first axis is collinear with the second axis.

Optionally, an angle α which satisfies 65° ≤ α < 75° is formed between a direction of extension of one of the first assembling grooves and a direction of extension of the other of the first assembling grooves.

Optionally, an angle β which satisfies 105° ≤ β ≤ 115° is formed between a direction of extension of one of the second assembling grooves and a direction of extension of the other of the second assembling grooves.

Optionally, the main frame further comprises:
a plurality of clamping parts, some of which are fitted to the fixing frame to fix the first arms, and the remaining ones of which are fitted to the fastening frame to fix the second arms.

Optionally, a stepped surface is provided in an inner side wall of the first assembling groove, the stepped surface extends in a direction of extension of the first assembling groove, the stepped surface is provided with at least one first assembling hole, and the clamping part is provided with at least one second assembling hole matching the first assembling hole.

Optionally, at least one guide slot is provided in an inner side wall of the first assembling groove, the guide slot extends in a depth direction of the first assembling groove, the guide slot has an upper end communicating with the open opening of the first assembling groove, the clamping part is provided with at least one guide portion matching the guide slot, and the guide portion is configured to be inserted from the upper end of the guide slot and moved from top to bottom along the guide slot.

Optionally, a weight reduction slot is provided in at least one of a bottom wall and a side wall of the first assembling groove, and the weight reduction slot extends through the corresponding bottom wall or side wall of the first assembling groove in its thickness direction.

Optionally, the fixing frame comprises:
a first connecting portion; and
two first fixing portions, wherein the two first fixing portions are connected to the two ends of the first connecting portion, respectively, and each of the first fixing portions is provided with the first assembling groove.

Optionally, the first fixing portion is provided with an abutment protrusion extending toward the interior of the first assembling groove, and the abutment protrusion is configured to be in abutment fit with the first arm to limit and fix the position of the first arm.

Optionally, the interior of each of the first assembling grooves is provided with two assembling bumps arranged spaced apart from each other in a direction of extension of the first assembling groove, each of the assembling bumps has a first fitting groove having an inner wall surface configured to be attached to an outer circumferential wall of the first arm, and one of the first arms is clamped and fixed by the spaced-apart two first fitting grooves provided in each of the first assembling grooves.

Optionally, the fastening frame comprises:
a second connecting portion; and
two second fixing portions, wherein the two second fixing portions are connected to the two ends of the second connecting portion, respectively, and each of the second fixing portions is provided with the second assembling groove.

Optionally, the main body comprises:
a top plate; and
a bottom plate arranged spaced apart from the top plate, wherein the fixing component is located between the top plate and the bottom plate.

Optionally, an installation space configured to accommodate a circuit board adapter component is defined by the top plate, the bottom plate, the fixing frame, together with the fastening frame, and the top plate is provided with a central hole communicating with the installation space.

Optionally, the main body further comprises:
a mounting frame, wherein the mounting frame has an end sandwiched between the top plate and the bottom plate, and the mounting frame is configured such that a liquid storage container and a battery of the aircraft are assembled therein.

Optionally, one of the fixing component and the main body is provided with guide pins, and the other of the fixing component and the main body is provided with guide holes matching the guide pins.

An embodiment of the present disclosure further provides an aircraft, comprising: a main frame which is the main frame for an aircraft described above.

Optionally, the aircraft further comprises:
at least one fastener, connected to the main body and provided with a first fixing groove; and
at least one fitting piece, detachably connected to the fastener and provided with a second fixing groove, wherein a clamping space configured to fix the first arm is defined by the first fixing groove together with the second fixing groove.

Optionally, the fastener comprises:
a base portion connected to the main body; and
a holding portion connected to the base portion, wherein an end surface of the holding portion away from the base portion is recessed toward the base portion, so as to form the first fixing groove.

Optionally, each of the first arms and each of the second arms are provided with power components, and the centers of the four power components are located at the four vertices of a rectangle, respectively.

The embodiments of the present disclosure include, for example, the following advantageous effects compared with the prior art.

The fixing frame and the fastening frame are arranged on the main body and spaced apart from each other in a first direction, so that the two first arms of the aircraft can be placed in the two first assembling grooves, respectively, and the two second arms of the aircraft can be placed in the two second assembling grooves, respectively. Thus, the main frame is simplified so that the aircraft has a more compact and reasonable structural layout, and the arms are easily assembled to and disassembled from the aircraft.

Additional aspects and advantages of the present disclosure will be set forth in the description which follows, and in part will be apparent from the following description, or may be learned by the practice of the present disclosure.

### Brief Description of Drawings

The above and/or additional aspects and advantages of the present disclosure will become apparent and easily understandable from the description of the embodiments with reference to the accompanying drawings below, in which:
FIG. 1 is a schematic structural view, from a first perspective, of an aircraft according to an embodiment of the present disclosure;
FIG. 2 is a schematic structural view, from a second perspective, of an aircraft according to an embodiment of the present disclosure;
FIG. 3 is a schematic structural view, from a third perspective, of an aircraft according to an embodiment of the present disclosure;
FIG. 4 is a partially enlarged structural view of part A circled in FIG. 3;
FIG. 5 is a schematic structural view of a top plate according to an embodiment of the present disclosure;
FIG. 6 is a schematic structural view of a bottom plate according to an embodiment of the present disclosure;
FIG. 7 is a schematic structural view, from a first perspective, of a fixing frame according to an embodiment of the present disclosure;
FIG. 8 is a schematic structural view, from a second perspective, of a fixing frame according to an embodiment of the present disclosure;
FIG. 9 is a schematic structural view, from a first perspective, of a fastening frame according to an embodiment of the present disclosure;
FIG. 10 is a schematic structural view, from a second perspective, of a fastening frame according to an embodiment of the present disclosure;
FIG. 11 is a schematic structural view of a mounting frame according to an embodiment of the present disclosure;
FIG. 12 is a schematic structural view of an arm combined with a collar and a fixing sleeve according to an embodiment of the present disclosure;
FIG. 13 is a schematic structural view, from a first perspective, of a collar according to an embodiment of the present disclosure;
FIG. 14 is a schematic structural view, from a second perspective, of a collar according to an embodiment of the present disclosure;
FIG. 15 is a schematic structural view of another collar according to an embodiment of the present disclosure;
FIG. 16 is a schematic structural view of a clamping part according to an embodiment of the present disclosure;
FIG. 17 is a schematic structural view of a fastener according to an embodiment of the present disclosure;
FIG. 18 is a schematic structural view of a fitting piece according to an embodiment of the present disclosure; and
FIG. 19 is a schematic structural view of a fixing sleeve according to an embodiment of the present disclosure.

Reference Numerals: 100-aircraft; 101-installation space; 102-clamping space; 103-assembling space; 10-main body; 11-bottom plate; 110-guide hole; 111-central through hole; 12-top plate; 121-avoidance hole; 122-central hole; 13-mounting frame; 131-fixing bracket; 1311-base plate; 1312-extension plate; 132-mounting bracket; 1321-end plate; 1322-side plate; 133-spacer; 134-first loading space; 135-second loading space; 14-undercarriage; 20-fixing component; 210-fixing frame; 211-first connecting portion; 212-first fixing portion; 2120-first assembling groove; 2121-assembling bump; 21211-first fitting groove; 2122-abutment protrusion; 2123-stepped surface; 21230-first assembling hole; 2214-guide slot; 2125-weight reduction slot; 2226-guide pin; 220-fastening frame; 221-second connecting portion; 222-second fixing portion; 2220-second assembling groove; 30-clamping part; 310-second fitting groove; 320-fastening portion; 321-second assembling hole; 330-guide portion; 340-flat upper end surface; 350-main portion; 40-collar; 401-lug; 4010-third assembling hole; 410-first arcuate segment; 420-second arcuate segment; 430-first planar segment; 440-second planar segment; 450-transitional segment; 460-filling groove; 470-sleeve hole; 480-reinforcing segment; 50-fastener; 510-base portion; 520-holding portion; 521-first fixing groove; 5211-buffer groove; 522-fixing projection; 5221-first fixing hole; 60-fitting piece; 610-second fixing groove; 620-second fixing hole; 70-fixing sleeve; 710-limiting protrusion; 810-liquid storage container; 820-battery; 90-arm; 901-first arm; 902-second arm; 910-power component; 920-rod.

### Detailed Description of Embodiments

The embodiments of the present disclosure will be described in detail below. Examples of the embodiments are shown in the accompanying drawings, throughout which the same or similar reference numerals indicate the same or similar elements or elements with the same or similar functions. The embodiments described below with reference to the accompanying drawings are exemplary, and are intended only to explain the present disclosure and should not be understood as limiting of the present disclosure.

In the description of the present disclosure, it should be understood that orientation or positional relationships indicated by the terms such as "center", "length", "thickness", "up", "down", "front", "rear", "left", "right", "top", "bottom", "inside", "outside", "axial direction", "radial direction", and "circumferential direction" are the orientation or positional relationships shown based on the figures, and these terms are intended only to facilitate the description of the present disclosure and simplify the description, but not intended to indicate or imply that the referred devices or elements must be in a particular orientation or constructed or operated in the particular orientation, and therefore should not be construed as limiting of the present disclosure.

In addition, a feature defined with the terms "first" and "second" may explicitly or implicitly include one or more such features. In the description of the present disclosure, "a plurality" means two or more unless otherwise expressly and specifically defined.

In the description of the present disclosure, it should be noted that the terms "mounted", "coupled", and "connected" should be understood broadly unless otherwise expressly specified or defined. For example, connection may be fixed connection or detachable connection or integral connection, may be mechanical connection or electric connection, or may be direct coupling or indirect coupling via an intermediate medium or internal communication between two elements. The specific meanings of the above-mentioned terms in the present disclosure can be understood by those of ordinary skill in the art according to specific situations.

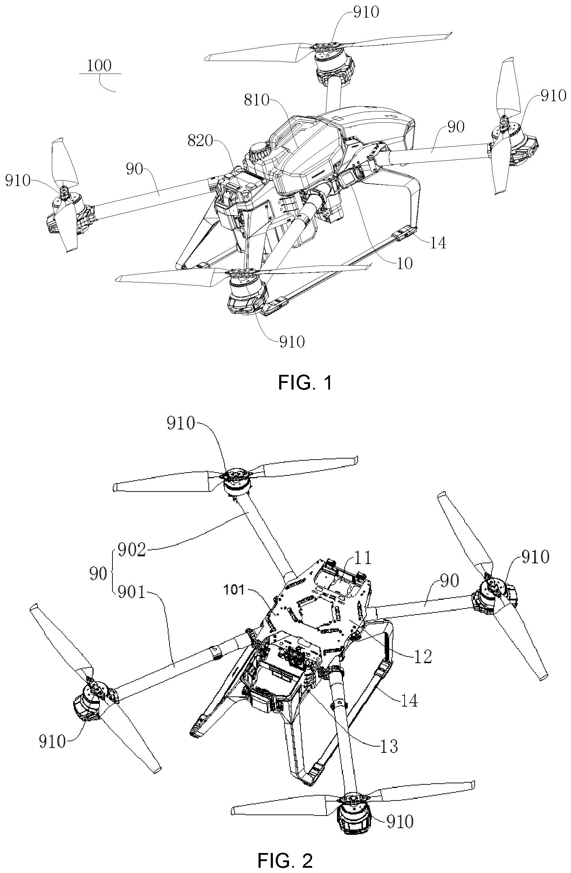

Referring to FIGS. 1 to 19, FIGS. 1 to 19 show a main frame for an aircraft 100 and the aircraft 100 according to this embodiment.

As shown in FIGS. 1, 3, and 7 to 10, the main frame for an aircraft 100 according to this embodiment comprises a main body 10 and a fixing component 20.

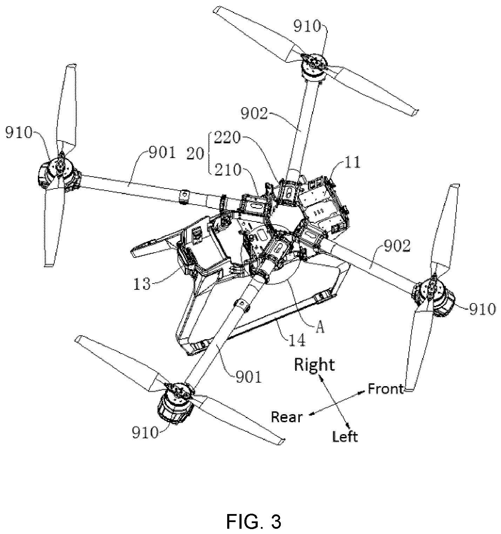

Specifically, as shown in FIG. 3 and FIGS. 7 to 10, the fixing component 20 is arranged on the main body 10. The fixing component 20 comprises a fixing frame 210 and a fastening frame 220 arranged spaced apart from each other in a first direction. The fixing frame 210 has two first assembling grooves 2120 arranged spaced apart from each other in a second direction. Each of the first assembling grooves 2120 is suitable for accommodating one of first arms 901 of the aircraft 100. The fastening frame 220 comprises two second assembling grooves 2220 arranged spaced apart from each other in the second direction. Each of the second assembling grooves 2220 is suitable for accommodating one of second arms 902 of the aircraft 100. The first direction is perpendicular to the second direction.

It should be noted that, with reference to FIG. 2, the aircraft 100 comprises four arms 90, two of which are the first arms 901, and two of which are the second arms 902. Equivalently, in other embodiments, six, eight, or more arms 90 may be provided. In this embodiment, only four arms 90 are introduced. When more than four arms 90 are provided, the structure is similar to that of the four arms 90 and therefore will not be described in detail.

The "first direction" described herein may be understood as a front-to-rear direction of the aircraft 100 shown in FIG. 3, and the "second direction" may be understood as a left-to-right direction of the aircraft 100 shown in FIG. 3. The "first arm 901" may be understood as the rear arm of the aircraft 100 near the rear side, and the "second arm 902" may be understood as the front arm of the aircraft 100 near the front side. Moreover, it should be noted that the first direction is perpendicular to the second direction, but the term "perpendicular" here does not require absolute perpendicularity, and a certain deviation is actually allowed.

As shown in FIG. 3, the fixing frame 210 and the fastening frame 220 are arranged spaced apart from each other in the front-to-rear direction. The fixing frame 210 is provided with two first assembling grooves 2120 configured to accommodate the first arms 901, and the fastening frame 220 is provided with two second assembling grooves 2220 configured to accommodate the second arms 902.

In the main frame for an aircraft 100 according to this embodiment, the fixing frame 210 and the fastening frame 220 are arranged on the main body 10 and spaced apart from each other in the first direction, so that the two first arms 901 of the aircraft 100 can be placed in the two first assembling grooves 2120, and the two second arms 902 of the aircraft 100 can be placed in the two second assembling grooves 2220. Thus, the main frame is simplified so that the aircraft 100 has a more compact and reasonable structural layout, and the arms 90 are easily assembled to and disassembled from the aircraft 100.

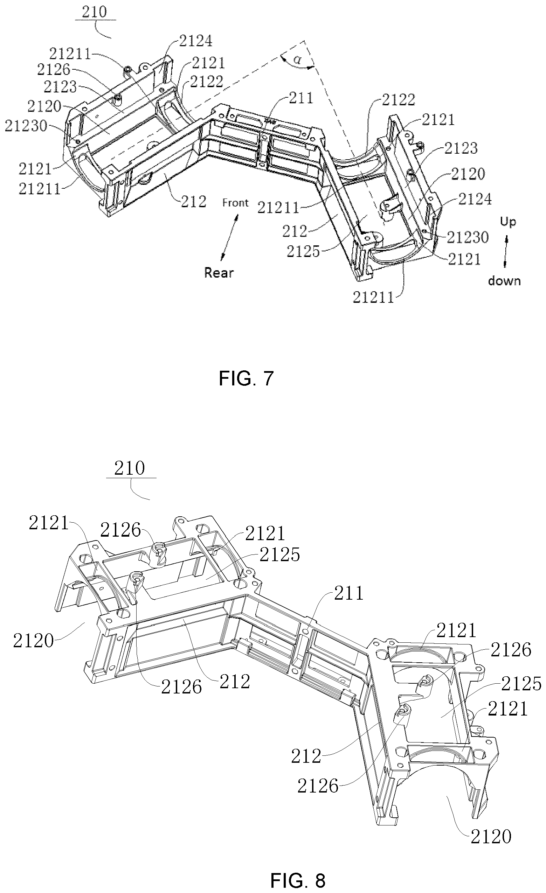

Optionally, as shown in FIGS. 7 and 8, the fixing frame 210 may be symmetrical about a first axis. In other words, the fixing frame 210 may be arranged as an axisymmetric structure, thereby facilitating the machining and manufacturing of the fixing frame 210 and advantageously improving the stability and reliability of the aircraft 100 during operation. The two dashed lines shown in FIG. 7 are distributed symmetrically about the first axis. Namely, the directions of extension of the two first assembling grooves 2120 are distributed symmetrically about the first axis. In other words, the first axis extends in the front-to-rear direction of the aircraft 100.

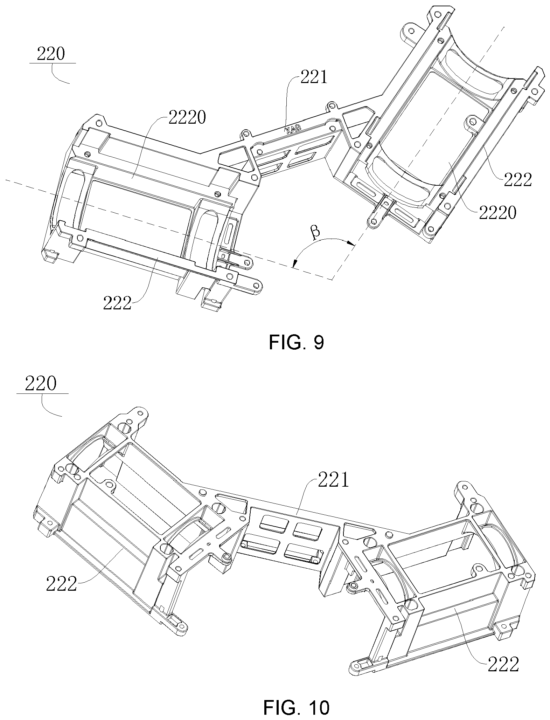

Optionally, as shown in FIGS. 9 and 10, the fastening frame 220 may be symmetrical about a second axis. In other words, the fastening frame 220 may be arranged as an axisymmetric structure, thereby facilitating the machining and manufacturing of the fastening frame 220 and advantageously improving the stability and reliability of the aircraft 100 during operation. The two dashed lines shown in FIG. 9 are distributed symmetrically about the second axis. Namely, the directions of extension of the two second assembling grooves 2220 are distributed symmetrically about the second axis. In other words, the second axis extends in the front-to-rear direction of the aircraft 100.

Optionally, the first axis is collinear with the second axis. In other words, when the fixing frame 210 and the fastening frame 220 are fixed to the main body 10, the symmetric axes of the fixing frame 210 and the fastening frame 220 may be collinear with each other. Thus, the aircraft 100 can have a symmetrical and stable structure, thereby advantageously improving the stability and reliability of the aircraft 100 during operation.

It should be noted that, in this embodiment, all the four arms 90 are straight rods with a circular cross section. The two first assembling grooves 2120 are symmetrically arranged, the two second assembling grooves 2220 are symmetrically arranged, both of them are symmetrical with respect to the same straight line. In this way, the aircraft 100 has a stable overall structure to advantageously improve the stability and reliability of the aircraft 100 in operation. In other embodiments, if the arms 90 are, for example, bent rods rather than straight rods, the fixing frame 210 and the fastening frame 220 may not assume an axisymmetric structure. Moreover, the fixing frame 210 is symmetrical about the first axis, the fastening frame 220 is symmetrical about the second axis, and the first axis is collinear with the second axis, but the term "collinear" here does not require that the first axis and the second axis extend in absolutely coincident directions. For example, if the first axis and the second axis are parallel to each other but spaced apart by a certain distance, or a certain angle is formed between the two axes, the two axes are still understood to be collinear with each other.

Optionally, as shown in FIG. 7, an angle α which satisfies 65° ≤ α < 75° is formed between the direction of extension of one of the first assembling grooves 2120 and the direction of extension of the other of the first assembling grooves 2120. When the angle α between the directions of extension of the two first assembling grooves 2120 satisfies 65° ≤ α ≤ 75°, the aircraft 100 is allowed to fly more stably and smoothly. For example, the angle α may be 65°, 67°, 70°, 73°, 75°, or the like.

Optionally, as shown in FIG. 9, an angle β which satisfies 105° ≤ β ≤ 115° is formed between the direction of extension of one of the second assembling grooves 2220 and the direction of extension of the other of the second assembling grooves 2220. When the angle β between the directions of extension of the two second assembling grooves 2220 satisfies 105° ≤ β ≤ 115°, the aircraft 100 is allowed to fly more stably and smoothly. For example, the angle β may be 105°, 108°, 110°, 113°, 115°, or the like.

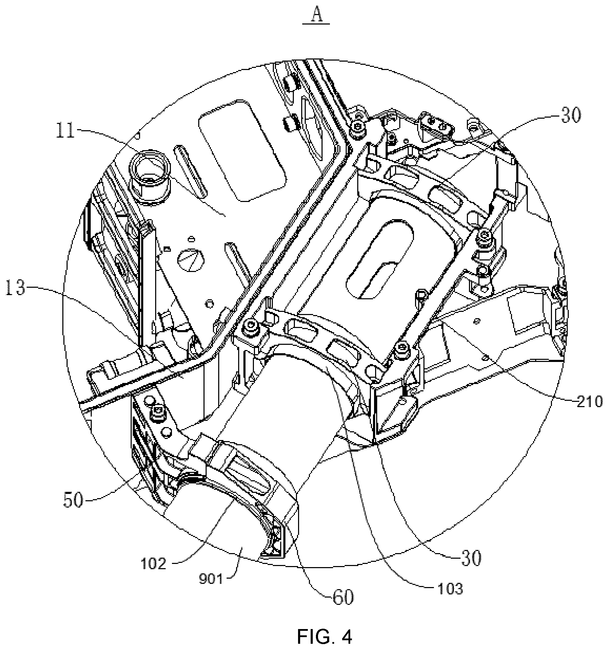

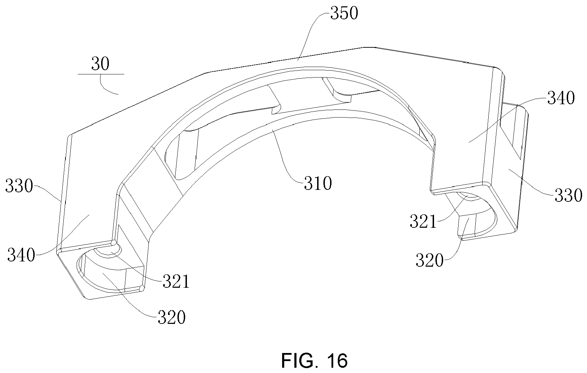

Optionally, as shown in FIGS. 4 and 16, the main frame may further comprise: a plurality of clamping parts 30, some of which are fitted to the fixing frame 210 to fix the first arms 901, and the remaining ones of which are fitted to the fastening frame 220 to fix the second arms 902.

The clamping parts 30 can serve to further stabilize the arms 90.

It should be noted that, with reference to FIGS. 7 and 16, each fixing frame 210 comprises two first fixing portions 212. Each of the first fixing portions 212 may be fitted with the clamping part(s) 30 to fix one first arm 901. Namely, two first arms 901 can be fixed by fitting each fixing frame 210 with the clamping parts 30. Thus, the structure of the main frame can be simplified, and the main frame can be easily assembled.

With reference to FIGS. 3, 9, and 16, the other ones of the clamping parts 30 may be detachably connected to the fastening frame 220. Each fastening frame 220 comprises two second fixing portions 222. Each of the second fixing portions 222 may be fitted with the clamping part(s) 30 to fix one second arm 902. Namely, two second arms 902 can be fixed by fitting each fastening frame 220 with the clamping parts 30. Thus, the structure of the main frame can be simplified, and the main frame can be easily assembled.

Optionally, as shown in FIG. 7, the fixing frame 210 may comprise: a first connecting portion 211 and two first fixing portions 212, wherein the two first fixing portions 212 are connected to the two ends of the first connecting portion 211, respectively, and each of the first fixing portions 212 is provided with a first assembling groove 2120. Thus, the two first arms 901 of the aircraft 100 can be fixed by the two first fixing portions 212, which have simple structures and can be assembled and disassembled conveniently.

Optionally, as shown in FIG. 7, each of the first fixing portions 212 is provided with an open first assembling groove 2120, whereby the first arm 901 can be put into the first assembling groove 2120 to facilitate the fixation and assembly of the first arm 901. The bottom wall of the first assembling groove 2120 is provided with an assembling bump(s) 2121, and the assembling bump 2121 is provided with a first fitting groove 21211. As shown in FIGS. 7 and 8, the upper end surface of the assembling bump 2121 is constructed as a first fitting groove 21211 shaped as an arcuate surface to facilitate the fitting and clamping of the first arm 901.

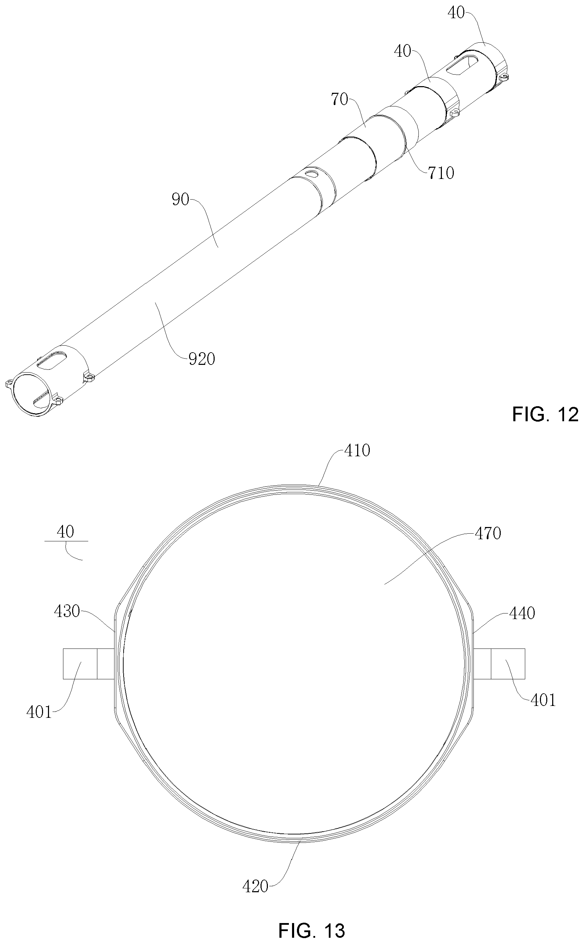

With reference to FIGS. 7 and 12, the fixed end of the arm 90 (taking the first arm 901 as an example) may be put into the first assembling groove 2120. When the first arm 901 is put into the first assembling groove 2120, the outer circumferential wall of the first arm 901 is attached to the inner wall surface of the first fitting groove 21211 to fix the first arm 901.

Optionally, as shown in FIGS. 7 and 8, the interior of each of the first assembling grooves 2120 is provided with two assembling bumps 2121. The two assembling bumps 2121 are arranged spaced apart from each other in the length direction (extending direction) of the first assembling groove 2120. It can be understood that two assembling bumps 2121 are arranged in each of the first assembling grooves 2120, and each of the assembling bumps 2121 has a first fitting groove 21211. In this way, when the first arms 901 are put into the corresponding first assembling grooves 2120, one of the first arms 901 is clamped and fixed by the spaced-apart two first fitting grooves 21211 provided in each of the first assembling grooves 2120. Thus, the first arms 901 can be fixed more securely and stably.

Optionally, as shown in FIG. 7, the first fixing portion 212 may be provided with an abutment protrusion 2122 extending toward the interior of the first assembling groove 2120. The abutment protrusion 2122 is located at an end of the first assembling groove 2120 remote from the free end of the first arm 901. The abutment protrusion 2122 is configured to be in abutment fit with the first arm 901. Thus, the abutment protrusion 2122 may be fitted to the first arm 901 to limit and fix the position of the first arm 901, so that the first arm 901 put into the first assembling groove 2120 can be preliminarily rested at a predetermined position so as to fix the first arm 901.

As shown in FIG. 7, two assembling bumps 2121 spaced apart from each other are arranged in each first assembling groove 2120 in the front-to-rear direction (the direction of extension of the first assembling groove 2120), wherein the assembling bump 2121 on the front side (in the front to rear direction as shown in FIG. 7) is provided with an abutment protrusion 2122 protruding from the fitting surface of the first fitting groove 21211. When the first arm 901 is put into the corresponding first assembling groove 2120, the abutment protrusion 2122 may abut against the first arm 901 to preliminarily fix the first arm 901 to a predetermined assembly position. Thus, the first arm 901 is assembled more conveniently. It can be understood that the abutment protrusion 2122 is not limited to being arranged at the position described above. For example, the abutment protrusion 2122 may be arranged on the inner circumferential wall of the first assembling groove 2120, as long as the abutment protrusion 2122 can be brought into abutment fit with the arm 90 to preliminarily fix the arm 90 to a fixed assembly position.

Optionally, as shown in FIG. 7, an inner side wall of the first assembling groove 2120 is provided with a stepped surface 2123. The stepped surface 2123 extends in the length direction (extending direction) of the first assembling groove 2120. The stepped surface 2123 is provided with a first assembling hole 2123. The clamping part 30 is provided with a second assembling hole 321 matching the first assembling hole 21230. Thus, the clamping parts 30 are easily fixed and assembled to the fixing frame 210. For example, when the clamping parts 30 are to be assembled to the fixing frame 210, the first assembling holes 21230 may be aligned with the corresponding second assembling holes 321, and the clamping parts 30 may be fixed to the fixing frame 210 by using threaded fasteners (e.g., screws). Thus, the clamping parts 30 can be assembled to the fixing frame 210 more securely and reliably, and the clamping parts 30 can be easily assembled to and dissembled from the fixing frame 210.

As shown in FIG. 7, the first assembling groove 2120 may be constructed as a stepped groove. The stepped surface 2123 on the inner side wall of the first assembling groove 2120 extends in the front-to-rear direction (i.e., the direction of extension of the first assembling groove 2120). The stepped surface 2123 is provided with first assembling holes 21230 at positions close to the first fitting grooves 21211. Correspondingly, as shown in FIG. 16, the ends of the clamping part 30 are provided with second assembling holes 321 matching the first assembling holes 21230. Thus, the clamping parts 30 can be easily fixed and assembled to the fixing frame 210.

It should be noted that each of the two opposite inner side walls of the first assembling groove 2120 is provided with one stepped surface 2123. One first assembling hole 21230 is distributed in each of the two opposite ends of each stepped surface 2123 in the direction of extension of the first assembling groove 2120. The clamping part 30 is substantially U-shaped and has two opposite ends in each of which one second assembling hole 321 is distributed. Namely, two clamping parts 30 are simultaneously fitted to one first fixing portion 212, so that the first arm 901 can be assembled therewith more securely.

Optionally, as shown in FIG. 7, guide slots 2124 are provided in the inner side walls of the first assembling groove 2120. The guide slots 2124 extend in the depth direction of the first assembling groove 2120 (i.e., the top-to-bottom direction shown in FIG. 7). The guide slots 2124 have upper ends communicating with the open opening of the first assembling groove 2120. With reference to FIG. 16, the clamping part 30 is provided with guide portions 330 matching the guide slots 2124. Thus, when the clamping parts 30 are to be assembled to the fixing frame 210, the guide portions 330 are configured to be inserted into the corresponding guide slots 2124 from the upper ends of the guide slots 2124 and moved from top to bottom along the guide slots 2124. After the ends of the clamping parts 30 abut against the stepped surfaces 2123, the clamping parts 30 are fixedly connected to the fixing frame 210 by using threaded fasteners passing through the first assembling holes 21230 and the second assembling holes 321. This facilitates the positioning and assembling of the clamping parts 30.

Optionally, as shown in FIGS. 7 and 8, a weight reduction slot 2125 is provided in at least one of the bottom wall and the side wall of the first assembling groove 2120. In other words, the weight reduction slot 2125 may be provided in the bottom wall of the first assembling groove 2120, or the weight reduction slot 2125 may be provided in the side wall of the first assembling groove 2120, or the weight reduction slots 2125 may be provided in both the bottom wall and the side wall of the first assembling groove 2120. The weight reduction slot 2125 may extend through the corresponding bottom wall or side wall of the first assembling groove 2120 in its thickness direction. It can be understood that the amount of material used in the fixing frame 210 and the production cost of the fixing frame 210 can be reduced by providing the weight reduction slot(s) 2125. Moreover, the overall weight of the aircraft 100 can be reduced, so that energy consumed by the aircraft 100 can be reduced during flight.

In some embodiments of the present disclosure, as shown in FIGS. 12 to 15, the main frame may further comprise: collars 40 sleeved around the fixed ends of the arms 90 and clamped in the assembling spaces 103 (shown in FIG. 4). It should be noted that when the first arm 901 is put into the first assembling groove 2120, the collar 40 may be clamped in the assembling space 103 defined by the first fitting groove 21211 and the second fitting groove 310 of the clamping part 30, whereby the arm 90 can be fixed more securely and reliably.

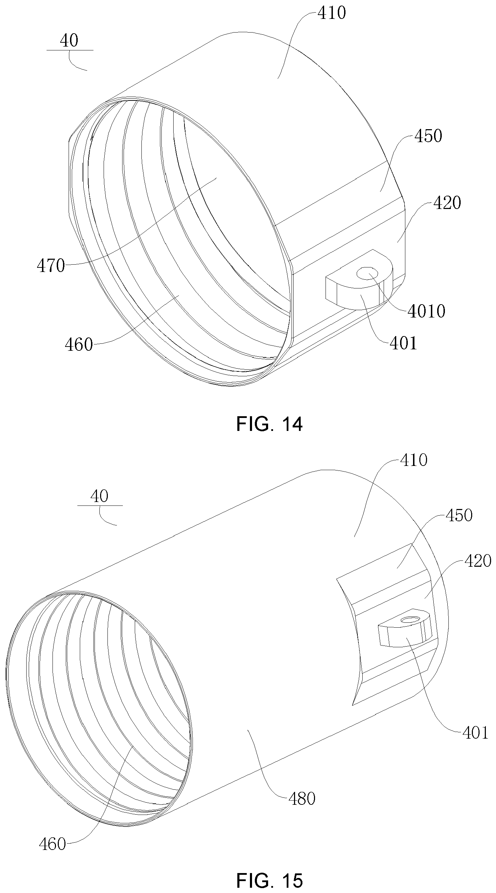

As shown in FIGS. 14 and 15, a filling groove 460 may be provided in the inner circumferential wall of the collar 40. When the collar 40 is to be assembled to the arm 90, glue may be applied to the outer circumferential wall of the arm 90 or to the filling groove 460 to fix the collar 40 to the arm 90 securely and reliably.

Optionally, as shown in FIGS. 13 to 15, a lug 401 is arranged on the outer circumferential wall of the collar 40. The lug 401 is provided with a third assembling hole 4010 configured for fixation. The clamping part 30 is provided with a receiving groove matching the lug 401. It should be noted that, with reference to FIGS. 7 and 12 to 16, when it is necessary to assemble the arms 90, the collars 40 may be first assembled to the fixed ends of the arms 90, and then the first arms 901 assembled with the collars 40 are put into the corresponding first assembling grooves 2120, and the second arms 902 assembled with the collars 40 are put into the corresponding second assembling grooves 2220. The collars 40 on the arms 90 are abutted against and positionally limited by the abutment protrusions 2122, so that the arms 90 are rested at predetermined positions.

At this time, the third assembling holes 4010 in the collars 40 are aligned with the first assembling holes 21230 in the stepped surfaces 2123. Subsequently, the clamping parts 30 are moved to predetermine positions by fitting the guide portions 330 into the guide slots 2124. At this time, the first assembling holes 21230, the second assembling holes 321, and the third assembling holes 4010 are all aligned with one another. Subsequently, the arms 90 are fixed and assembled by using threaded fasteners passing through the second assembling holes 321, the third assembling holes 4010, and the first assembling holes 21230.

Optionally, as shown in FIGS. 13 and 14, the outer wall surface of the collar 40 comprises a first arcuate segment 410, a first planar segment 430, a second arcuate segment 420, and a second planar segment 440 that are connected in sequence. The lug 401 is arranged on at least one of the first planar segment 430 and the second planar segment 440. Correspondingly, with reference to FIGS. 7 and 16, the inner circumferential wall of the assembling space 103 (shown in FIG. 4) defined by the first fitting groove 21211 and the second fitting groove 310 is constructed in a shape matching that of the outer wall surface of the collar 40. Thus, the collars 40 can be fitted to the fixing frame 210 and to the clamping parts 30 more securely and reliably. Moreover, the relative rotation of the collar 40 in the assembling space 103 can be effectively prevented by providing the first planar segment 430 and the second planar segment 440, whereby the collar 40 can be fixed more securely and reliably.

Optionally, as shown in FIGS. 13 and 14, the outer wall surface may further comprise: transitional segments 450. The transitional segments 450 are provided between the first arcuate segment 410 and the first planar segment 430, between the first arcuate segment 410 and the second planar segment 440, between the second arcuate segment 420 and the first planar segment 430, and between the second arcuate segment 420 and the second planar segment 440. Correspondingly, with reference to FIGS. 7 and 16, the inner circumferential wall of the assembling space 103 defined by the first fitting groove 21211 and the second fitting groove 310 is constructed in a shape matching that of the outer wall surface of the collar 40. The firmness and reliability of the fixing of the collar 40 can be further improved by providing the transitional segments 450. Each of the transitional segments 450 may consist of one flat surface or a plurality of flat surfaces connected in sequence, thereby facilitating the design and machining between the first arcuate segment 410 and the first planar segment 430, between the first arcuate segment 410 and the second planar segment 440, between the second arcuate segment 420 and the first planar segment 430, and between the second arcuate segment 420 and the second planar segment 440.

Optionally, as shown in FIG. 15, the collar 40 may be provided with a reinforcing segment 480 extending in the axial direction. Thus, the length of the collar 40 to be fitted to the arm 90 can be increased, thereby further improving the firmness and reliability of the fixation between the arm 90 and the collar 40.

Optionally, as shown in FIG. 9, the fastening frame 220 may comprise: a second connecting portion 221 and two second fixing portions 222, wherein the two second fixing portions 222 are connected to the two ends of the second connecting portion 221, respectively, and each of the second fixing portions 222 is provided with a second assembling groove 2220. The second fixing portion 222 has the same shape as that of the first fixing portion 212, and will not be described in detail here. Thus, the two second arms 902 of the aircraft 100 can be fixed by using the two second fixing portions 222, so that the aircraft 100 can have a more compact and reasonable structure, and the arms of the aircraft 100 can be easily assembled and disassembled.

Optionally, as shown in FIG. 1 and FIGS. 4 to 6, the main body 10 may comprise: a top plate 12 and a bottom plate 11. The bottom plate 11 is arranged spaced apart from the top plate 12. The fixing component 20 is located between the top plate 12 and the bottom plate 11. With reference to FIG. 1 and FIGS. 4 to 6, the fixing component 20 is arranged on the bottom plate 11. The top plate 12 is arranged above and spaced apart from the bottom plate 11. The top plate 12 is provided with avoidance holes 121 at positions corresponding to the first fitting grooves 21211.

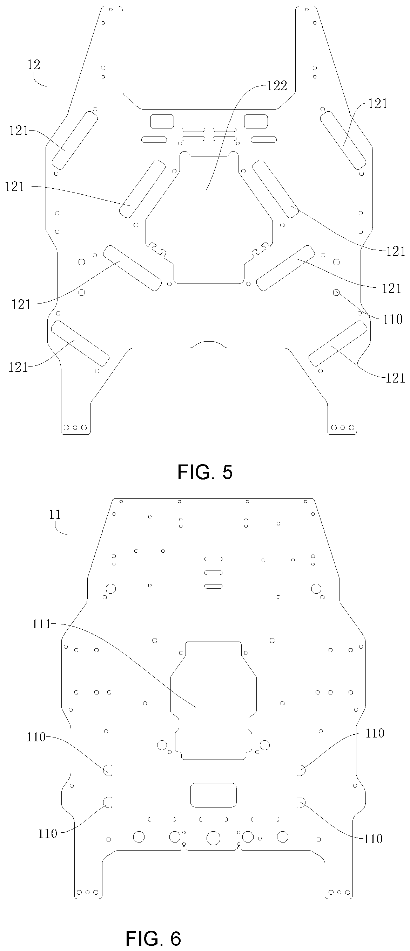

It should be noted that, with reference to FIGS. 5 and 16, the avoidance holes 121 may be provided in a shape matching that of the clamping parts 30. The avoidance holes 121 extend through the top plate 12 in the thickness direction of the top plate 12. With reference to FIGS. 4 to 7 and FIG. 16, the fixing component 20 is arranged between the top plate 12 and the bottom plate 11. The top plate 12 is provided with avoidance holes 121 at positions corresponding to the first fitting grooves 21211. The clamping parts 30 may be assembled to and disassembled from the fixing component 20 through the corresponding avoidance holes 121. Thus, the clamping parts 30 can be assembled to and disassembled from the fixing component 20 more conveniently, thereby improving the efficiency of fixing of the arms 90.

Optionally, as shown in FIGS. 2 and 3, an installation space 101 configured to accommodate a circuit board adapter component is defined by the top plate 12, the bottom plate 11, the fixing frame 210, together with the fastening frame 202. In other words, the circuit board adapter component of the aircraft 100 may be arranged in the installation space 101 defined by the top plate 12, the bottom plate 11, the fixing frame 210, together with the fastening frame 220. Thus, the parts of the aircraft 100 can be arranged in a more reasonable layout, and it is easy to connect the circuit board adapter component and other electronic parts.

As shown in FIGS. 2, 3, and 5, the top plate 12 is provided with a central hole 122 communicating with the installation space 101. This facilitates the installation and detachment of the circuit board adapter component and facilitates the connection between the circuit board adapter component and other electronic parts.

Optionally, as shown in FIGS. 1, 3, and 11, the main body 10 may further comprise: a mounting frame 13 having an end sandwiched between the top plate 12 and the bottom plate 11. It should be noted that the aircraft 100 may be provided with parts such as a liquid storage container 810 and a battery 820. The fixing frame 210 is arranged to facilitate the assembling of the parts such as the liquid storage container 810 and the battery 820 onto the aircraft 100.

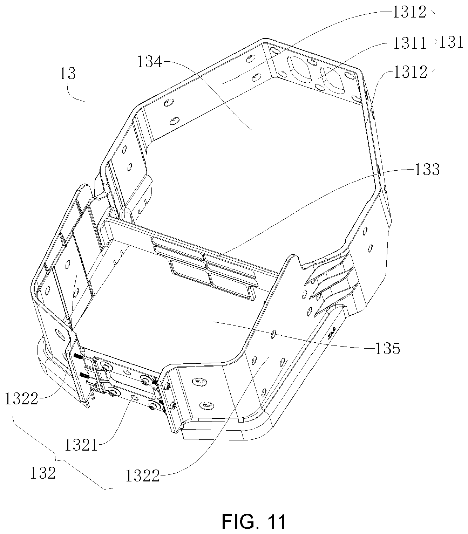

As shown in FIG. 11, the mounting frame 13 comprises: a fixing bracket 131, a mounting bracket 132, and a spacer 133.

Here, the fixing bracket 131 is configured to mount a liquid storage container 810. The liquid storage container 810 may be loaded with a liquid such as a chemical liquid or water so as to achieve the functions of spraying a chemical liquid and watering by the aircraft 100. As shown in FIG. 11, the fixing bracket 131 comprises a base plate 1311 and two extension plates 1312. One of the extension plates 1312 is connected to one end of the base plate 1311, and the other extension plate 1312 is connected to the other end of the base plate 1311.

The mounting bracket 132 is configured to mount a battery 820. The battery 820 can supply energy for the flight of the aircraft 100. As shown in FIG. 11, the mounting bracket 132 comprises an end plate 1321 and two side plates 1322. One of the side plates 1322 have two ends connected to one end of the end plate 1321 and to one of the two extension plates 1312, respectively, and the other side plate 1322 have two ends connected to the other end of the end plate 1321 and to the other of the two extension plates 1312, respectively.

As shown in FIG. 11, the spacer 133 is connected between the two side plates 1322. Thus, the mounting frame 13 may be divided into a first loading space 134 and a second loading space 135, the liquid storage container 810 may be arranged in the first loading space 134, and the battery 820 may be arranged in the second loading space 135. Thus, mutual interference between the liquid storage container 810 and the battery 820 can be avoided, and the liquid storage container 810 and the battery 820 can be fixed more securely and reliably.

Optionally, at least one of the base plate 1311 and the extension plates 1312 is connected to the fixing component 20. In other words, the base plate 1311 may be connected to the fixing component 20; or the extension plates 1312 may be connected to the fixing component 20; or both the base plate 1311 and the extension plates 1312 may be connected to the fixing component 20. Thus, the fixing component 20 can be fixed more securely and reliably.

Optionally, with reference to FIGS. 4, 7, and 11, the first connecting portion 211 is connected to the mounting frame 13. For example, the first connecting portion 211 may be arranged in a plate shape, and the first connecting portion 211 and the mounting frame 13 may be fixedly connected to each other by using threaded fasteners (e.g., screws). Thus, the first connecting portion 211 and the mounting frame 13 can be fixed to each other more securely and reliably, and it is easy to fix, assemble, and disassemble the first connecting portion 211 and the mounting frame 13.

With reference to FIGS. 7, 8, and 11, the outline of the fixing frame 210 matches the outline of the mounting frame 13. During assembling of the fixing frame 210 and the mounting frame 13, the first connecting portion 211 is aligned with and connected to the base plate 1311 by threaded fasteners (e.g., screws), and the two first fixing portions 212 are aligned with and connected to the two extension plates 1312 by threaded fasteners (e.g., screws), respectively. Thus, the fixing frame 210 and the mounting frame 13 are fixed to each other more securely and reliably, and the fixing frame 210 and the mounting frame 13 are easily assembled to and disassembled from each other.

Optionally, one of the fixing component 20 and the main body 10 is provided with guide pins 2126, and the other of the fixing component 20 and the main body 10 is provided with guide holes 110 matching the guide pins 2126. In other words, the fixing component 20 may be provided with guide pins 2126, and the main body 10 may be provided with guide holes 110 matching the guide pins 2126; or the fixing component 20 may be provided with guide holes 110, and the main body 10 may be provided with guide pins 2126 matching the guide holes 110. Thus, the fixing component 20 and the main body 10 are easily aligned and assembled with each other by fitting the guide pins 2126 into the guide holes 110.

With reference to FIGS. 5 to 8, the guide pins 2126 are provided on both the top and bottom walls of the first assembling grooves 2120. Correspondingly, the guide holes 110 matching the guide pins 2126 are provided in both the top plate 12 and the bottom plate 11. Thus, the fixing component 20 and the main body 10 are easily positioned and assembled to each other by fitting the guide pins 2126 into the guide holes 110.

The aircraft 100 according to this embodiment comprises a main frame, which is the main frame for an aircraft 100 described above.

In the aircraft 100 of this embodiment, the fixing frame 210 and the fastening frame 220 are arranged on the main body 10 and spaced apart from each other in the first direction, so that the two first arms 901 of the aircraft 100 can be placed in the two first assembling grooves 2120, respectively, and the two second arms 902 of the aircraft 100 can be placed in the two second assembling grooves 2220, respectively. Thus, the main frame is simplified so that the aircraft 100 has a more compact and reasonable structural layout, and the arms 90 are easily assembled to and disassembled from the aircraft 100.

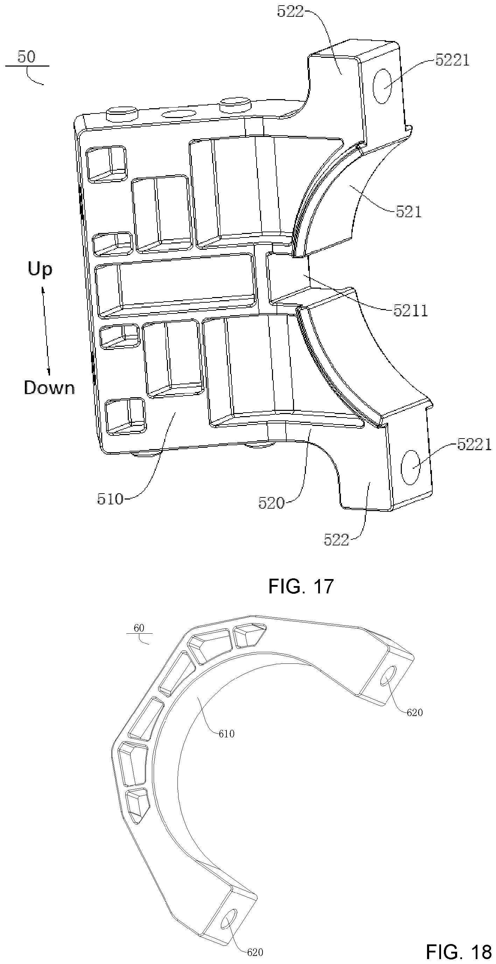

Optionally, with reference to FIG. 4, the aircraft 100 further comprises: a fastener 50 and a fitting piece 60. The fitting piece 60 is detachably connected to the fastener 50. As shown in FIG. 17, the fastener 50 is provided with a first fixing groove 521. Correspondingly, as shown in FIG. 18, the fitting piece 60 is provided with a second fixing groove 610. A clamping space 102 configured to fix the first arm 901 is defined by the first fixing groove 521 together with the second fixing groove 610. Thus, the first arm 901 can be further fixed and clamped by the fastener 50 and the fitting piece 60, thereby further improving the firmness and reliability of the fixing of the first arm 901.

Specifically, the fastener 50 is connected to the main body 10, and, more specifically, mounted to the mounting frame 13 of the main body 10.

Optionally, as shown in FIG. 17, the fastener 50 comprises: a base portion 510 and a holding portion 520. The base portion 510 is connected to the main body 10. The holding portion 520 is connected to the base portion 510. An end surface of the holding portion 520 remote from the base portion 510 is recessed toward the base portion 510 to form the first fixing groove 521. As shown in FIG. 17, the first fixing groove 521 may be constructed as a semicircular arcuate surface, thereby facilitating the fitting and fixing of the first arm 901 into the first fixing groove 521.

Optionally, as shown in FIG. 17, there may be rounded corners between the holding portion 520 and the base portion 510. It may be understood from the "rounded corners between the holding portion 520 and the base portion 510" described here that the holding portion 520 and the base portion 510 do not extend in parallel directions, and for example, a certain angle is formed between the base portion 510 and the holding portion 520. With reference to FIG. 4, for example, the holding portion 520 may extend in a direction away from the fixing component 20. Thus, it is easy to fix and assemble the fastener 50 to the main body 10, and the structural interference between the fastener 50 and other parts is reduced. Moreover, the distance between the fastener 50 and the fixing component 20 can be increased, the length of the fixed segment of the first arm 901 can be increased, and therefore the arm 90 can be fixed more securely and reliably.

Optionally, as shown in FIGS. 17 and 18, the holding portion 520 is provided with a fixing projection 522. The fixing projection 522 is provided with a first fixing hole 5221. The fitting piece 60 is provided with a second fixing hole 620 matching the first fixing hole 5221. Thus, the fastener 50 and the fitting piece 60 can be easily fixed and assembled to each other. As shown in FIG. 17, both ends of the first fixing groove 521 have the fixing protrusions 522, and the fixing protrusions 522 are provided with first fixing holes 5221. Correspondingly, as shown in FIG. 18, the fitting piece 60 is provided with second fixing holes 620 matching the first fixing holes 5221. Thus, the fastener 50 and the fitting piece 60 can be assembled together conveniently and reliably by using threaded fasteners (e.g., screws) passing through the first fixing holes 5221 and the second fixing holes 620.

Optionally, as shown in FIG. 17, the inner circumferential wall of the first fixing groove 521 is partially recessed inward to form a buffer groove 5211. It should be noted that the elastic deformability of the fastener 50 can be improved by providing the buffer groove 5211. For example, the outer diameter of the first arm 901 may be slightly larger than the inner diameter of the clamping space 102. When the first arm 901 is assembled into the clamping space 102 defined by the first fixing groove 521 and the second fixing groove 610, the first arm 901 exerts a radial expansion force on the inner circumferential walls of the first fixing groove 521 and the second fixing groove 610. The buffer groove 5211 is opened to a larger opening under the action of the expansion force to decompose and transform the expansion force exerted on the inner circumferential walls of the first fixing groove 521 and the second fixing groove 610, and the first arm 901 can be tightly wrapped in the clamping space 102.

In addition, when the first arm 901 is collided, the forces acting on the first arm 901 and on the inner walls of the first fixing groove 521 and the second fixing groove 610 can also be transmitted and dispersed to the buffer groove 5211, so that breakage of the first arm 901 under force can be avoided, and therefore the first arm 901 has increased safety and service life.

Optionally, as shown in FIG. 17, the buffer groove 5211 may be located in the middle of the first fixing groove 521. This advantageously improves the structural stability of the fastener 50 and advantageously improves the stability of the aircraft 100 during flight. In addition, the buffer groove 5211 is easily machined and made by providing the buffer groove 5211 in the middle of the first fixing groove 521, whereby the fastener 50 can be produced with increased efficiency and the fastener 50 can be produced with reduced cost.

Optionally, as shown in FIG. 17, the buffer groove 5211 may extend through the holding portion 520 in the thickness direction of the holding portion 520. This can improve the elastic deformability and flexibility of the fastener 50. The fastener 50 can be effectively prevented from being rigidly broken when the aircraft 100 is collided.

Optionally, a plurality of buffer grooves 5211 may be provided, and the plurality of buffer grooves 5211 are spaced apart from one another in the length direction of the holding portion 520 (i.e., the top-to-bottom direction shown in FIG. 17). It can be understood that the plurality of buffer grooves 5211 arranged spaced apart from one another in the top-to-bottom direction can further improve the flexibility and elastic deformability of the fastener 50, thereby further improving the structural robustness of the aircraft 100.

Optionally, the bottom surface of the buffer groove 5211 is a flat surface or an arcuate surface. In other words, the bottom surface of the buffer groove 5211 may be provided as a flat surface. Thus, the buffer groove 5211 is easily machined and made, whereby the fastener 50 can be produced with increased efficiency and the fastener 50 can be produced with reduced cost. The bottom surface of the buffer groove 5211 may also be provided as an arcuate surface, thus the bottom surface of the buffer groove 5211 can have increased structural strength.

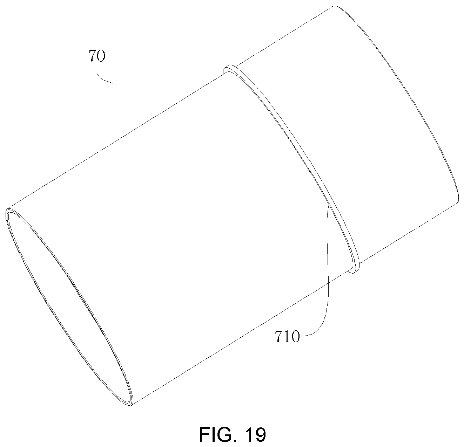

Optionally, as shown in FIGS. 12 and 19, the aircraft 100 may further comprise: fixing sleeves 70 sleeved around the arms 90 and clamped in the clamping spaces 102. It should be noted that the fixing sleeve 70 is clamped between the outer circumferential wall of the arm 90 and the inner circumferential wall of the clamping space 102 when the arm 90 is fitted and assembled with the fastener 50. Thus, the arm 90 can be fixed more securely and reliably.

For example, the fixing sleeve 70 may be glued to the outer circumferential wall of the arm 90. Thus, the fixing sleeve 70 can be assembled to the arm 90 with increased efficiency and with increased reliability.

Optionally, as shown in FIGS. 13 and 19, a limiting protrusion 710 is arranged on the outer circumferential wall of the fixing sleeve 70. For example, the limiting protrusion 710 may be an annular limiting protrusion 710 protruding from the outer circumferential wall of the fixing sleeve 70 and arranged in the circumferential direction of the fixing sleeve 70. Thus, the limiting protrusion 710 is easily machined and made.

At least one of the fastener 50 and the fitting piece 60 is provided with a limiting ring groove matching the limiting protrusion 710. In other words, the limiting ring groove matching the limiting protrusion 710 may be provided in the fastener 50, or the limiting ring groove matching the limiting protrusion 710 may be provided in the fitting piece 60. Of course, the limiting ring groove may also be defined by the fastener 50 together with the fitting piece 60. The axial movement of the arm 90 can be effectively avoided by the abutting fit between the limiting protrusion 710 and the limiting ring groove, and therefore the arm 90 can be fixed more securely and stably.

Optionally, as shown in FIGS. 1 to 3, each of the first arms 901 and each of the second arms 902 are provided with power components 910, and the centers of the four power components 910 are located at the four vertices of a rectangle. It can be understood that the power components 910 can supply power for the flight of the aircraft 100. As shown in FIGS. 1 to 3, the aircraft 100 has two first arms 901 and two second arms 902. Each of the first arms 901 and each of the second arms 902 are provided with power components 910. A rectangle may be constructed by sequentially connecting the centers of the four power components 910. Thus, the aircraft 100 can be operated more smoothly and reliably.

### In some embodiments:

As shown in FIGS. 1 to 3, the aircraft 100 may be a UAV or a drone. The aircraft 100 may be configured to be used in the agricultural industry to perform tasks including: spraying agricultural chemicals onto crops or watering crops. Of course, the aircraft 100 may also be configured to be used in other fields for spraying of fire extinguishing liquids in case of forest fires, aerial photography, electric power inspection, environment monitoring, forest fire prevention, and disaster inspection.

Referring to FIGS. 1 to 3, the aircraft 100 comprises: a main body 10, a fixing component 20, arms 90, an undercarriage 14, power components 910, a liquid storage container 810, a battery 820, an electronic speed control (ESC) module, and a control module (an electronic control device). The four arms 90 are distributed around the main body 10 and fixedly connected to the main body 10. The arms 90 include two first arms 901 close to the rear side of the aircraft 100 and two second arms 902 close to the front side of the aircraft 100. The undercarriage 14 is fixed under the main body 10 to ensure stable take-off and landing of the aircraft 100. The power components 910 are fixed at the ends of the arms 90 away from the main body 10. The power components 910 supply lift for flight of the aircraft 100. The liquid storage container 810 is mounted onto the main body 10 and configured to contain a substance to be sprayed or transported. The battery 820 is fixed to the main body 10 and configured to supply energy to the power components 910 of the aircraft 100. The electronic speed control module and the control module are fixed to the main body 10 and configured to control the flying posture of the aircraft 100. The main body 10 comprises a top plate 12, a bottom plate 11, and a mounting frame 13, wherein the top plate 12 and the bottom plate 11 are configured to carry modules such as the electronic speed control module and the control module, and the liquid storage container 810 and the battery 820 are adapted to be fixed in the mounting frame 13. An installation space 101 configured to accommodate a circuit board adapter component is formed in the main body 10. The fixing component 20 comprises a fixing frame 210 and a fastening frame 220. The fixing frame 210 is arranged on the main body 10 and configured to simultaneously fix the two first arms 901 located on the rear side of the aircraft 100. The fastening frame 220 is arranged on the main body 10 and configured to simultaneously fix the two second arms 902 located on the front side of the aircraft 100.

Referring to FIG. 4, the fixing frame 210 is mounted to the bottom plate 11, both opposite ends of the fixing frame 210 are provided with clamping parts 30, and an assembling space 103 configured to allow the first arm 901 to be mounted therein is defined between the clamping parts 30 and the fixing frame 210. A clamping space 102 configured to allow the first arm 901 to be mounted therein is defined between the fastener 50 and the fitting piece 60. The fastener 50 is mounted to the mounting frame 13.

Referring to FIGS. 5 and 6, the top plate 12 is provided with a plurality of via holes, eight avoidance holes 121, and guide holes 110, and a central hole 122 is further provided in the center of the top plate 12. The bottom plate 11 is provided with a plurality of via holes and four guide holes 110. A central through hole 111 corresponding to the central hole 122 in the top plate 12 is provided in the center of the bottom plate 11.

Referring to FIGS. 7 and 8, the fixing frame 210 comprises two first fixing portions 212 and a first connecting portion 211 connected to the two first fixing portions 212. The two first fixing portions 212 have the same structure. Each of the first fixing portions 212 is formed in a substantially rectangular parallelepiped shape and has a top surface and a bottom surface, a first side surface and a second side surface, and a front end surface and a rear end surface which are arranged opposite to each other, respectively.

As shown in FIG. 7, each of the first fixing portions 212 is provided with a first assembling groove 2120 configured to allow the first arm 901 to be connected therein. Specifically, the first assembling groove 2120 extends through the top surface of the first fixing portion 212 and extends through the front and rear end surfaces thereof, and the first assembling groove 2120 is formed as a stepped groove. The stepped surfaces on both sides of the first assembling groove 2120 are formed as stepped surfaces 2123 parallel to the bottom surface. Assembling bumps 2121 are formed at both front and rear ends of the first assembling groove 2120. The assembling bump 2121 has a first fitting groove 21211 with an opening facing the top surface. The two ends of the first fitting groove 21211 are connected to the side walls of the first assembling groove 2120. An abutment protrusion 2122 is arranged on the first fitting groove 21211 of the assembling bump 2121 close to the front end surface. Further, first assembling holes 21230 configured to fix the first arm 901 are provided in the two stepped surfaces 2123 corresponding to the assembling bumps 2121. Guide slots 2124 perpendicular to the stepped surfaces 2123 are provided in the side walls of the first assembling groove 2120 on both sides of the first assembling holes 21230.

Further, the top surface of the first fixing portion 212 is provided with threaded holes corresponding to the via holes in the top plate 12, and the bottom surface of the first fixing portion 212 is provided with threaded holes corresponding to the via holes in the bottom plate 11. Guide pins 2126 are also arranged on the top surface and the bottom surface of the first fixing portion 212, respectively.

Weight reduction slots 2125 are also provided in the side walls and bottom wall of the first fixing portion 212. The weight reduction slots 2125 may be provided to reduce the weight of the fixing frame 210 and increase the elastic deformability of the first fixing portion 212, thereby increasing the connection stability of the first fixing portion 212. Specifically, the weight reduction slots 2125 extend through the corresponding side walls and bottom wall.

Referring to FIG. 7, the first connecting portion 211 is connected between the first side surfaces of the two first fixing portions 212, and an angle α of specifically 70° is formed between the two first fixing portions 212. The angle α is an angle between the two dashed lines in FIG. 7, and the two dashed lines represent the directions of extension of the two first assembling grooves 2120, respectively.

Referring to FIGS. 9 and 10, the fastening frame 220 comprises two second fixing portions 222 and a second connecting portion 221 connected to the two second fixing portions 222. Each of the second fixing portions 222 is provided with a second assembling groove 2220 configured to allow the second arm 902 to be assembled therein. The structure of the second fixing portion 222 is similar to the structure of the first fixing portion 212 and will not be described in detail here. The second connecting portion 221 is connected between the two second fixing portions 222. Moreover, an angle β of specifically 110° is formed between the two second fixing portions 222. The angle β is an angle between the two dashed lines in FIG. 9, and the two dashed lines represent the directions of extension of the two second assembling grooves 2220, respectively.

During assembling, the fixing frame 210 and the fastening frame 220 are placed on the bottom plate 11, respectively, wherein the fixing frame 210 is placed at the rear end of the bottom plate 11, and the guide pins 2126 on the bottom surfaces of the first fixing portions 212 are fitted into the guide holes 110 of the bottom plate 11. Then, threaded fasteners (e.g., screws) are fixed into the threaded holes provided in the bottom surfaces of the first fixing portions 212 corresponding to the via holes in the bottom plate 11 through the plurality of via holes of the bottom plate 11, so that the fixing frame 210 is fixedly connected to the bottom plate 11. Similarly, the fastening frame 220 is fixed in the same way as the fixing frame 210.

Then, the top plate 12 is placed on the fixing frame 210 and the fastening frame 220, so that the guide pins 2126 on the top surfaces of the first fixing portions 212 are fitted into the guide holes 110 of the top plate 12, and threaded fasteners (e.g., screws) are connected into the threaded holes provided in the top surfaces of the first fixing portions 212 through the via holes in the top plate 12 to fix and connect the top plate 12 to the fixing frame 210. Similarly, the top plate 12 is also fixed to the fastening frame 220 by threaded fasteners (e.g., screws).

Referring to FIG. 11, the mounting frame 13 comprises a fixing bracket 131, a mounting bracket 132 connected to the fixing bracket 131, and a spacer 133 connected to the mounting bracket 132. Here, the fixing bracket 131, the mounting bracket 132, and the spacer 133 may be integrally molded. Specifically, the fixing bracket 131 is arranged between the top plate 12 and the bottom plate 11 and connected to the fixing frame 210, wherein the fixing bracket 131 comprises a base plate 1311 and two extension plates 1312 extending obliquely from the two opposite sides of the base plate 1311. The base plate 1311 is connected to the first connecting portion 211. The two extension plates 1312 are arranged in a substantially V shape. Each of the extension plates 1312 is connected to the first fixing portion 212 by threaded fasteners (e.g., screws). The mounting bracket 132 comprises two opposite side plates 1322 and an end plate 1321 connecting the two side plates 1322. The end plate 1321 is connected to ends of the two side plates 1322 remote from the main body 10, and an end of each side plate 1322 remote from the end plate 1321 is connected to the corresponding extension plate 1312.

As shown in FIG. 11, a loading space is defined by the mounting frame 13. The spacer 133 is connected between the two side plates 1322 and divides the loading space into a first loading space 134 and a second loading space 135. The liquid storage container 810 may be mounted in the first loading space 134, and the battery 820 may be mounted in the second loading space 135.

Referring to FIG. 12, the arm 90 comprises a cylindrical hollow rod 920. The rod 920 is an aluminum alloy tube covered with a carbon fiber material, or the rod 920 may be a plastic tube made of plastic or a carbon tube made of a carbon fiber material. The rod 920 comprises a free end and a fixed end arranged opposite to each other. The fixed end of the rod 920 is connected to the fixing component 20 of the main body 10. The corresponding power component 910 is mounted at the free end of the rod 920. Specifically, one end of the rod 920 is fixed to the fixing component 20 by a clamping component, wherein the clamping component comprises a collar 40 and a clamping part 30. As shown in FIG. 12, two collars 40 may be sleeved around the outer circumferential wall of the rod 920 and distributed spaced apart from each other. A fixing sleeve 70 is also sleeved around the outer circumferential wall of the rod 920. An annular limiting protrusion 710 is arranged around the outer circumferential wall of the fixing sleeve 70.

Referring to FIGS. 13 to 15, the collar 40 has outer and inner wall surfaces facing away from each other. A connecting sleeve hole 470 is defined by the inner wall surface of the collar 40. The sleeve hole 470 may be glued to the outer wall surface of the rod 920. When viewed in the counterclockwise direction in FIG. 13, the outer wall surface of the collar 40 comprises a first arcuate segment 410, a first planar segment 430, a second arcuate segment 420, and a second planar segment 440 that are connected in sequence. A transitional segment 450 is provided between each planar segment and each arcuate segment. Each of the transitional segments 450 may consist of a plurality of small flat surfaces, or the transitional segment 450 may consist of an arcuate surface.

As shown in FIGS. 13 and 14, further, the collar 40 is further provided with a lug 401. Specifically, there are two lugs 401 arranged opposite to each other. The two lugs 401 are arranged on the first planar segment 430 and on the second planar segment 440, respectively, and each of the lugs 401 is formed in a flat plate shape perpendicular to the planar segment. The two lugs 401 are provided with third assembling holes 4010 extending therethrough in their thickness directions, respectively. With reference to FIGS. 14 and 15, a filling groove 460 is provided in the inner circumferential wall of the collar 40. The filling groove 460 may be filled with glue when the collar 40 is to be assembled to the arm 90. With reference to FIG. 15, the collar 40 is also provided with a reinforcing segment 480 extending in its axial direction to increase its length that is brought into contact with the arm 90.

Referring to FIG. 16, the clamping part 30 is a substantially U-shaped piece, which comprises two fastening portions 320 and a main portion 350 connected between the two fastening portions 320. The main portion 350 comprises top and bottom surfaces opposite to each other. A number of weight reduction grooves are provided in the top surface to reduce the mass of the clamping part 30. The bottom surface comprises a second fitting groove 310 with a concave surface facing downward. Each of the fastening portions 320 has a lower end provided with a receiving groove. A second assembling hole 321 is provided in the bottom wall of the receiving groove.

The clamping part 30 is an integrally molded piece. In other words, the fastening portions 320 and the main portion 350 of the clamping part 30 are machined and manufactured in one piece. In this way, not only the clamping part 30 is produced and manufactured by a simple process, but also the fastening portions 320 and the main portion 350 of the clamping part 30 are connected at higher strength. Thus, the reliability of the clamping mechanism can be improved, and the arm 90 and the main body 10 of the aircraft 100 are connected more securely. Both the opposite ends of the clamping part 30 are provided with guide portions 330. The flat upper end surfaces 340 of the two fastening portions 320 are located on the same plane in the thickness direction of the clamping part 30.

As described above, each arm 90 corresponds to two collars 40 and two clamping parts 30. The rod 920 is connected to the fixing component 20 of the main body 10 by means of the two collars 40 and the two clamping parts 30. Specifically, the two first arms 901 are fixed to the two first fixing portions 212, respectively, and the other two second arms 902 are fixed to the two second fixing portions 222, respectively.

Referring to FIGS. 17 and 18, the main frame further comprises a fastener 50 and a fitting piece 60. The fastener 50 and the fitting piece 60 may be made of a glass fiber-reinforced nylon material. The fastener 50 is fixed to the mounting frame 13 of the main body 10 by threaded fasteners such as screws. The fitting piece 60 is a substantially U-shaped piece having two ends fixed to the fastener 50 by threaded fasteners such as screws, respectively. The first arm 901 is clamped between the fastener 50 and the fitting piece 60. Specifically, as shown in FIG. 17, the fastener 50 comprises a base portion 510 and a holding portion 520, wherein the base portion 510 is fixedly connected to the fixing bracket 131 of the main body 10, and the holding portion 520 is arranged on the base portion 510. Here, a side surface of the base portion 510 of the fastener 50 is fixed to the fixing bracket 131 of the main body 10 by threaded fasteners such as screws, and the bottom surface of the base portion 510 of the fastener 50 is fixed to the bottom plate 11 of the main body 10. A surface of the holding portion 520 remote from the base portion 510 is recessed inward to form an arcuate first fixing groove 521. The holding portion 520 is further provided with a buffer groove 5211 that partitions the first fixing groove 521. Both opposite ends of the holding portion 520 are provided with fixing protrusions 522, and each of the fixing projections 522 is provided with one first fixing hole 5221.

As shown in FIG. 18, the fitting piece 60 is formed as an arcuate strip and has two ends fixed to the two ends of the holding portion 520, respectively. A surface of the fitting piece 60 facing the fastener 50 is recessed inwardly to form a second fixing groove 610. The first arm 901 is clamped between the first fixing groove 521 and the second fixing groove 610. Specifically, the two opposite ends of the fitting piece 60 are each provided with one second fixing hole 620. The one first fixing hole 5221 and the one second fixing hole 620 match each other, so that the fastener 50 and the fitting piece 60 can be fixed to each other by threaded fasteners, and a clamping space 102 configured to clamp the first arm 901 is formed by the first fixing groove 521 and the second fixing groove 610.

Referring to FIG. 19, an annular limiting protrusion 710 is arranged around the outer circumferential wall of the fixing sleeve 70, and the limiting protrusion 710 is arranged in the circumferential direction of the fixing sleeve 70.

Referring to FIGS. 1 to 19 in combination, processes for assembling and disassembling one of the arms 90 will be described below. The other arms 90 are assembled and disassembled by the same processes. During assembling, glue is applied, by using a glue applicator (not shown), to the outer circumferential surface of the rod 920 to which the collars 40 are to be mounted, and then the two collars 40 are sleeved around the outer circumferential surface of the rod 920, so that the collars 40 are glued and fixed to the fixed end of the rod 920.

The fixed end of the rod 920 assembled with the collars 40 is inserted through the first assembling groove 2120 in the first fixing portion 212 until the end surface of the rod 920 or of one of the collars 40 abuts against the end surface of the abutment protrusion 2122. At this time, the second arcuate segment 420 of each collar 40 can be fitted to the first fitting groove 21211 of the assembling bump 2121, and the lower half portions of the first planar segment 430 and the second planar segment 440 of the collar 40 are fitted to the side walls of the first fitting groove 2120, respectively.

Two clamping parts 30 are inserted into the first assembling groove 2120 of the first fixing portion 212 through the avoidance holes 121 in the top plate 12. At this time, each of the clamping parts 30 is guided by the guide slots 2124 in the side walls of the first assembling groove 2120, so that the second fitting groove 310 in the bottom surface of the main portion 350 is fitted to the first arcuate segment 410 of the collar 40. The planar segments of the fastening portions 320 are fitted to the upper half portions of the first planar segment 430 and the second planar segment 440 of the collar 40. Moreover, the top walls of both the fastening portions 320 are provided with second assembling holes 321 configured to be aligned with the first assembling holes 21230 in the two stepped surfaces 2123, respectively, and the lugs 401 are received in the receiving grooves. At the same time, the third assembling holes 4010 in the lugs 401 are aligned between the first assembling holes 21230 and the second assembling holes 321.

When it is necessary to disassemble the arm 90, the arm 90 can be detached by removing the clamping parts 30 without disassembling the main body 10. This facilitates the replacement and maintenance of the arm 90.

Thus, the fixing frame 210 and the fastening frame 220 are arranged on the main body 10 and spaced apart from each other in the first direction, so that the two first arms 901 of the aircraft 100 can be placed in the two first assembling grooves 2120, respectively, and the two second arms 902 of the aircraft 100 can be placed in the two second assembling grooves 2220, respectively. Thus, the main frame is simplified so that the aircraft 100 has a more compact and reasonable structural layout, and the arms 90 are easily assembled to and disassembled from the aircraft 100.

In the description of this specification, a reference term such as "one embodiment", "some embodiments", "an exemplary embodiment", "an example", "a specific example", or "some examples" is described to mean that a specific feature, structure, material, or characteristic described in connection with the embodiment or example is included in at least one embodiment or example of the present disclosure. In this specification, the indicative representation of the above terms does not necessarily refer to the same embodiments or examples. Moreover, the described specific features, structures, materials, or characteristics can be combined in an appropriate manner in any one or more embodiments or examples.

Although the embodiments of the present disclosure have been shown and described, it can be understood by those of ordinary skill in the art that various changes, modifications, alternatives, and variations can be made to these embodiments without departing from the principle and spirit of the present disclosure. The scope of the present disclosure is defined by the claims and their equivalents.

### Industrial Applicability:

In summary, the present disclosure provides a main frame for an aircraft and an aircraft, which have simple structures and allow easy mounting and detachment of the arms to and from the main body.

## Claims

1. A main frame for an aircraft, **characterized by** comprising:
a main body; and
a fixing component, wherein the fixing component is arranged on the main body, and the fixing component comprises a fixing frame and a fastening frame, which are arranged spaced apart from each other in a first direction, wherein the fixing frame has two first assembling grooves arranged spaced apart from each other in a second direction, each of the first assembling grooves is suitable for accommodating one of first arms of the aircraft, and the fastening frame comprises two second assembling grooves arranged spaced apart from each other in the second direction, each of the second assembling grooves is suitable for accommodating one of second arms of the aircraft, and the first direction is perpendicular to the second direction.

2. The main frame for an aircraft according to claim 1, wherein the fixing frame is symmetrical about a first axis; and/or,
the fastening frame is symmetrical about a second axis; and/or,
the first axis is collinear with the second axis.

3. The main frame for an aircraft according to claim 1 or 2, wherein an angle α which satisfies 65° ≤ α ≤ 75° is formed between a direction of extension of one of the first assembling grooves and a direction of extension of the other of the first assembling grooves.

4. The main frame for an aircraft according to any one of claims 1 to 3, wherein an angle β which satisfies 105° ≤ β ≤ 115° is formed between a direction of extension of one of the second assembling grooves and a direction of extension of the other of the second assembling grooves.

5. The main frame for an aircraft according to any one of claims 1 to 4, wherein the main frame further comprises:
a plurality of clamping parts, some of which are fitted to the fixing frame to fix the first arms, and remaining ones of which are fitted to the fastening frame to fix the second arms.

6. The main frame for an aircraft according to claim 5, wherein a stepped surface is provided in an inner side wall of each of the first assembling grooves, wherein the stepped surface extends in a direction of extension of one of the first assembling grooves, the stepped surface is provided with at least one first assembling hole, and each of the plurality of clamping parts is provided with at least one second assembling hole matching the at least one first assembling hole.

7. The main frame for an aircraft according to claim 5 or 6, wherein at least one guide slot is provided in an inner side wall of each of the first assembling grooves, wherein the at least one guide slot extends in a depth direction of one of the first assembling grooves, the at least one guide slot has an upper end communicating with an open opening of the one of the first assembling grooves, each of the plurality of clamping parts is provided with at least one guide portion matching the at least one guide slot, and the at least one guide portion is configured to be inserted from the upper end of the at least one guide slot and moved from top to bottom along the at least one guide slot.

8. The main frame for an aircraft according to any one of claims 1 to 7, wherein a weight reduction slot is provided in at least one of a bottom wall and a side wall of each of the first assembling grooves, and the weight reduction slot extends through a corresponding bottom wall or side wall of one of the first assembling grooves in a thickness direction.

9. The main frame for an aircraft according to any one of claims 1 to 8, wherein the fixing frame comprises:
a first connecting portion; and
two first fixing portions, wherein the two first fixing portions are connected to two ends of the first connecting portion, respectively, and each of the two first fixing portions is provided with one of the first assembling grooves.

10. The main frame for an aircraft according to claim 9, wherein each of the two first fixing portions is provided with an abutment protrusion extending toward an interior of one of the first assembling grooves, wherein the abutment protrusion is configured to be in abutment fit with one of the first arms to fix the one of the first arms for position limiting.

11. The main frame for an aircraft according to any one of claims 1 to 10, wherein the interior of each of the first assembling grooves is provided with two assembling bumps, wherein the two assembling bumps are arranged spaced apart from each other in a direction of extension of one of the first assembling grooves, each of the two assembling bumps has a first fitting groove, which has an inner wall surface configured to be attached to an outer circumferential wall of one of the first arms, and one of the first arms is fixedly clamped by the two first fitting grooves, which are arranged spaced apart from each other and provided in each of the first assembling grooves.

12. The main frame for an aircraft according to any one of claims 1 to 11, wherein the fastening frame comprises:
a second connecting portion; and
two second fixing portions, wherein the two second fixing portions are connected to two ends of the second connecting portion, respectively, and each of the two second fixing portions is provided with one of the second assembling grooves.

13. The main frame for an aircraft according to any one of claims 1 to 12, wherein the main body comprises:
a top plate; and
a bottom plate arranged spaced apart from the top plate, wherein the fixing component is located between the top plate and the bottom plate.

14. The main frame for an aircraft according to claim 13, wherein an installation space configured to accommodate a circuit board adapter component is defined by the top plate, the bottom plate, the fixing frame and the fastening frame, and the top plate is provided with a central hole communicating with the installation space.

15. The main frame for an aircraft according to claim 13 or 14, wherein the main body further comprises:
a mounting frame, wherein the mounting frame has an end sandwiched between the top plate and the bottom plate, and the mounting frame is configured such that a liquid storage container and a battery of the aircraft are assembled therein.

16. The main frame for an aircraft according to any one of claims 1 to 15, wherein one of the fixing component and the main body is provided with guide pins, and the other one of the fixing component and the main body is provided with guide holes matching the guide pins.

17. An aircraft, **characterized by** comprising: a main frame, wherein the main frame is the main frame for an aircraft according to any one of claims 1 to 16.

18. The aircraft according to claim 17, further comprising:
at least one fastener, wherein the at least one fastener is connected to the main body and provided with a first fixing groove; and
at least one fitting piece, wherein the at least one fitting piece is detachably connected to the at least one fastener and provided with a second fixing groove, wherein a clamping space configured to fix one of the first arms is defined by the first fixing groove and the second fixing groove.

19. The aircraft according to claim 18, wherein the at least one fastener comprises:
a base portion, connected to the main body; and
a holding portion, connected to the base portion, wherein an end surface of the holding portion away from the base portion is recessed toward the base portion, so as to form the first fixing groove.

20. The aircraft according to any one of claims 17 to 19, wherein each of the first arms and each of the second arms are provided with power components, and centers of four power components are located at four vertices of a rectangle, respectively.
